# EUROPEAN PATENT SPECIFICATION

(11) **EP 2 371 986 B1**
(45) Date of publication and mention of the grant of the patent: **15.03.2017**
(21) Application number: 11250395.8
(22) Date of filing: 29.03.2011
(51) Int. Cl.: C23C 4/06, C23C 4/08, C23C 4/18, C23C 10/18, C23C 10/60, C23C 28/00, F01D 5/28, C23C 4/073

(54) **Metallic coating for non-line of sight areas**
Metallische Beschichtung für Bereiche ohne Sichtverbindung
Revêtement métallique pour zones indirectes

(30) Priority: 30.03.2010 US 749785
(43) Date of publication of application: 05.10.2011
(73) Proprietor: United Technologies Corporation, Farmington, CT 06032 (US)
(72) Inventor: Schlichting, Kevin W., South Glastonbury Connecticut 06033 (US); Tryon, Brian S., Glastonbury Connecticut 06033 (US)
(74) Representative: Stevens, Jason Paul

(56) References cited:
- EP-A1- 1 528 117
- EP-A2- 1 829 847
- WO-A1-2005/051866
- US-A1- 2004 048 090

## Description

### BACKGROUND

This disclosure generally relates to a process of applying a thermal and oxidative resistant coating. More particularly, this disclosure relates to a process of applying a thermal and oxidative resistant coating to non-line of sight regions of a component.

Components that operate in high temperature environments such as turbine vanes are coated to provide thermal and oxidative protection. Such coatings are often applied using a thermal spraying technique. Thermal spraying techniques use melted materials that are sprayed onto a desired surface. The coating material is heated by a plasma or arc torch and propelled onto the surfaces of the component part.

Known coating processes are disclosed in EP 1528117 and EP 1829847. In EP 1528117, a paste is applied to a component (which may be a component of a gas turbine engine), dried and then heat-treated. The paste is applied to all areas of the component which need to be coated. In EP 1829847, a coating is applied by dipping a substrate into a slurry, to coat all parts of the component.

### SUMMARY

A disclosed process for coating an aircraft component includes the steps of: applying a spray coating to at least one first surface of a component by a thermal spraying process; applying a slurry coating to at least one second surface of the component, wherein the second surface is not reachable by the spray coating process utilized to coat the first surface; and heat-treating the component; wherein the heat-treating step serves to diffuse the applied spray coating and the slurry coating into the first and second surface of the component; wherein the spray coating on the at least one first surface and the slurry coating on the at least one second surface comprise a metallic coating that provides oxidative resistance and creates a bonding layer onto which a subsequently applied ceramic coating bonds; and wherein the method further includes the step of applying a ceramic coating to the component after diffusion of the spray coating and the slurry coating.

An example disclosed component is a turbine vane configured as a doublet. Turbine vanes operate in a high temperature environment and therefore are coated to provide oxidative resistance and to create a thermal barrier. The example process utilizes a thermal spraying process to apply a coating, preferably a metallic coating, on line of sight surfaces and a slurry coating, preferably including metallic particles suspended in an organic binder, for applying a coating to surfaces not reachable with the thermal spraying process referred to as non-line of sight surfaces. The applied coating on both the line of sight and non-line of sight surfaces provides a bond layer for the application of a ceramic coating.

These and other features disclosed herein can be best understood from the following specification and drawings, the following of which is a brief description.

### BRIEF DESCRIPTION OF THE DRAWINGS

Figure 1 is a schematic representation of example process for coating a component.
Figure 2 is a schematic representation of example layers of coating applied to the component.

### DETAILED DESCRIPTION

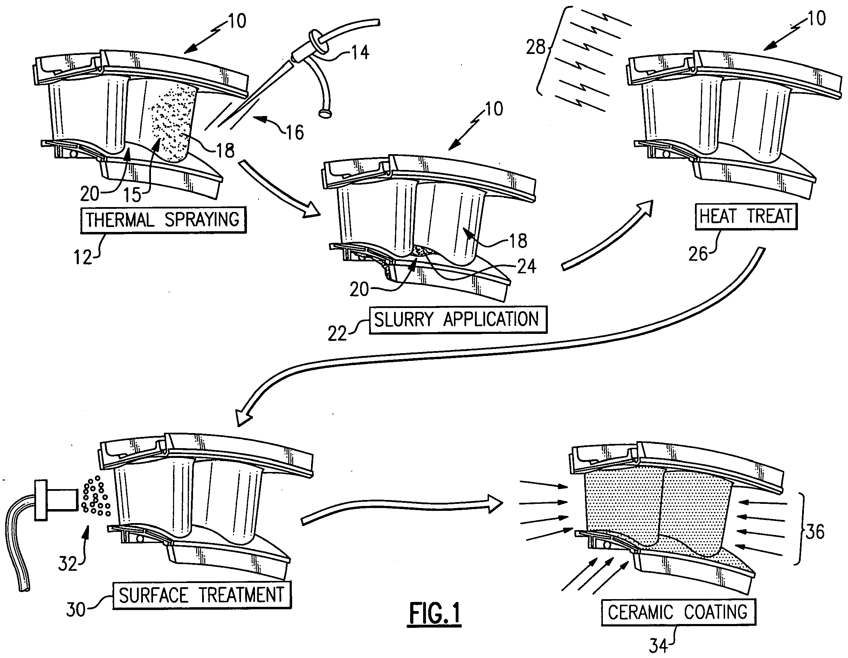

Referring to Figure 1, an example turbine vane 10 is configured as a doublet that includes two airfoils attached to common upper and lower platforms. Turbine vanes operate in a high temperature environment and therefore are coated to provide oxidative resistance and to create a thermal barrier.

The example process utilizes one process for applying a coating to surfaces reachable utilizing a thermal spraying process, referred to in this disclosure as line of sight surfaces, and a second process for applying a coating to surfaces not reachable with the thermal spraying process, referred to as non-line of sight surfaces in this disclosure. The coatings applied by thermal spraying and slurry application provide a bond layer for a ceramic layer. Although the disclosure refers to a turbine vane doublet 10, the disclosed process will benefit other components that require coatings to provide oxidation protection for the component improving the thermal durability.

The example coating process utilizes a line of sight thermal spraying process as indicated at 12. The example thermal spraying process utilizes a plasma torch 14 that directs heated materials 16 onto a surface of the turbine vane 10. The example thermal spraying process is a low-pressure plasma spraying process that utilizes heat generated by the plasma torch 14 to melt and propel materials on to line of sight surfaces 18. The example line of sight surfaces 18 are those surfaces that are reachable with the thermal spraying process such that desired coating coverages and thicknesses can be accomplished. It will be appreciated that there are some surfaces that are not feasibly reachable with the thermal spraying process where desired coating coverages and thicknesses cannot be reliably created. Although some material may be deposited in such non-line of sight surfaces schematically indicated at 20, the microstructure, coating thickness and physical properties achieved by thermal spraying may not be as desired.

The example process begins with the application of a coating 15 by the thermal spraying process 12. The disclosed example spraying process utilizes a plasma torch 14 to both melt and propel the coating material on to the line of sight surfaces 18. It will be appreciated that other thermal spaying processes may be utilized as desired to meet the final process parameters.

The example material that is coated onto the turbine vane 10 can include compounds of Nickel, Cobalt, Aluminium, Iron and any mixture of such materials that provide the desired thermal capability and oxidative protection. Moreover, the example material can also include compounds known in the art as MCrAIYs where the M denotes one of Nickel (Ni), Cobalt (Co) or NiCo materials and Cr, Al, and Y represent the elemental designations for Chromium, Aluminium, and Yttrium, respectively. The example material is also selected such that it serves as a bond coat for ceramic material applied subsequent to the metal coating.

Once the line of sight surfaces 18 have been coated using the thermal spraying process 12, the non-line of sight surfaces 20 may still require a coating. The non-line of sight surfaces include those surfaces of the turbine vane 10 that the thermal spraying process 12 cannot reliably deposit material required to form the bond coat for the ceramic material. Prior to any additional processing actions, the surfaces 18 and 20 are treated to remove any loose materials and to remove any oxidation that may have developed. The treatment of these surfaces is accomplished using a grit blast process, vapour blasting process, application of emery paper, or any other process known for removing an undesired oxidative coating. Moreover, the treatment of these surfaces may be bypassed depending on the amount, or lack of oxidation build up on the metallic coatings applied during the initial thermal spraying process.

The disclosed process includes the step of applying a slurry coating as is schematically indicated at 22. The example slurry coating indicated schematically at 24 is a suspension of Nickel or MCrAIY based alloy particles in an organic binder. The example particle sizes are less than about 25 microns. The prepared slurry is applied to the non-line of sight areas 20 through a process capable of applying the slurry 24 on to difficult to reach non-line of sight locations on the turbine vane 10.

In this example, the slurry coating 24 is brushed on. Different processes and methods can be utilized within the contemplation of the disclosed method for, filling cavities or spreading the slurry, such as other manual application processes utilizing various spreading and application tools including for example brushing, dipping and spraying processes. The viscosity of the slurry within the organic binder maintains the slurry coating on the non-line of sight surfaces 20. In other words, the slurry coating compositions provide a desired viscosity that temporarily adheres the slurry to the surface 20 of the turbine vane 10 until a heat treat diffusion process.

Once the slurry coating 24 is applied to the non-line of sight surfaces 20 of the turbine vane 10, a heat treat step indicated at 26 is performed. The heat treat step 26 provides for the elimination of the organic binder portion of the slurry coating 24. The heat treat step 26 also provides for the diffusion bonding of both the slurry coating 24 and the thermally sprayed coating 15. Diffusion bonding of the coatings 15 and 24 creates the oxidative resistant layer and provides a layer onto which a thermal barrier, such as a ceramic coating, can adhere. This enables the desired operation in the high temperature environments in which the turbine vane 10 operates.

The example heat treat process 26 is accomplished by applying heat 28 to the turbine vane 10 to attain a temperature sufficient to burn out the organic binder of the slurry and to diffuse both the thermally sprayed coating 15 and the slurry coating 24 into the substrate of the turbine vane 10. The temperature and duration that the turbine vane 10 is maintained is dependent on the substrate, and the specific material composition of the coatings 15, 24. In the disclosed example, the coated turbine vane 10 is heat treated for 1 to 4 hours at a temperature range between 1600°F and 2000 °F (871°C and 1093°C). Other durations and temperatures would be utilized depending on the material composition of the coatings. Diffusion bonding of the coatings 15 and 24 create an oxidative resistant layer that enables desired operation in the high temperature environment in which the example turbine vane 10 operates.

Once the turbine vane 10 is heat treated, the surface is mechanically treated and/or prepared. The surface treatment as is schematically indicated at 30 comprises a cold working process such as peening or other surface blast processes that improve mechanical properties of the coating on the turbine vane 10. The example surface treatment process includes propelling shot 32 at the surface of the turbine vane 10. The mechanical working of the surface induces compressive stresses while reducing tensile stresses to provide an increased resistance to fatigue and corrosion. The surface treatment process also prepares the surface of the turbine vane 10 for the application of a ceramic coating 36 as is schematically indicated at 34. The preparation process smoothes the surface for ceramic coating and closes up pores in the coating on the turbine vane 10.

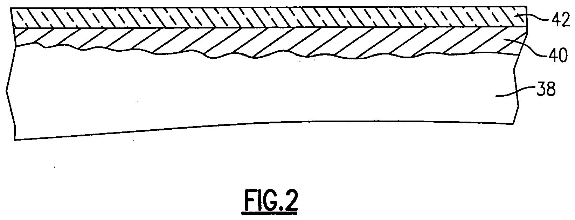

Referring to Figure 2 with continued reference to Figure 1, the turbine vane 10 includes the substrate 38 onto which the metallic coating layer 40 is applied. The layer 40 comprises the thermally sprayed coating 15 and the slurry coating 24. The layer 40 is heat treated such that it diffuses into the substrate 38. Surface treatment of the layer 40 improves the mechanical properties of the layer 40. Following surface heat treatment, turbine vane 10, which includes layer 40, is typically heat treated prior to application of the ceramic coating. This heat treatment forms a thermally grown oxide on the surface of the layer 40. In this example, the thermally grown oxide includes primarily aluminium oxide. Other thermally grown oxide compositions can form depending on the chemical composition of layer 40.

The ceramic layer 42 is then applied and bonds to the thermally grown oxide on layer 40. The ceramic layer 42 is applied using ceramic application techniques such as thermal spraying and vapour deposition processes. The layer 40 is present on both the line of sight 18 and non-line of sight 20 surfaces of the turbine vane 10 that form the gas path surfaces of the turbine vane 10. Therefore, the ceramic layer 42 can be applied and bonded to the gas path surfaces of the turbine vane 10. The ceramic layer 40 provides improved durability and thermal protection characteristics when applied not only to the line of sight surfaces 18, but also to the non-line of sight surfaces 20.

The example process enables ceramic coating of all gas path surfaces for components with difficult to coat geometries and configurations such as the example doublet turbine vane 10 because metal bond layer coatings can be applied, and controlled as desired on all gas path surfaces. Moreover, the example process provides a bond coat to which ceramic coatings can be applied on both line of sight and non-line of sight surfaces.

Although an example embodiment has been disclosed, a worker of ordinary skill in this art would recognize that certain modifications would come within the scope of this disclosure. For that reason, the following claims should be studied to determine the scope and content of this invention.

## Claims

1. A process of coating a component comprising the steps of:
applying a spray coating (15) to at least one first surface of a component (10) by a thermal spraying process (12);
applying (22) a slurry coating (24) to at least one second surface of the component (10), wherein the second surface is not reachable by the spray coating process (12) utilized to coat the first surface; and
heat-treating (26) the component;
wherein the heat-treating step (26) serves to diffuse the applied spray coating (15) and the slurry coating (24) into the first and second surface of the component (10);
wherein the spray coating (15) on the at least one first surface and the slurry coating (24) on the at least one second surface comprise a metallic coating that provides oxidative resistance and creates a bonding layer onto which a subsequently applied ceramic coating (36) bonds; and
wherein the method further includes the step (34) of applying a ceramic coating (36) to the component (10) after diffusion of the spray coating (15) and the slurry coating (24).

2. The process as recited in claim 1, wherein the heat-treating step (26) serves to release undesired portions of the slurry from the component (10).

3. The process as recited in any preceding claim, wherein the slurry coating (24) includes a suspension of metallic particles, preferably one of nickel based alloy particles and MCrAIY based alloy particles.

4. The process as recited in claim 3, wherein the one of the nickel based alloy particles and the MCrAIY based alloy particles are smaller than 25 microns and are suspended in an organic binder.

5. The process as recited in any preceding claim, including the step (30) of mechanically treating at least one surface of the component (10).

6. The process as recited in any preceding claim, wherein the component (10) comprises a turbine vane assembly (10).

7. The process as recited in claim 6, wherein the slurry coating (24) comprises a oxidation resistant composition capable of bonding with a subsequently applied ceramic coating (36), and preferably includes a material that produces a thermally grown oxide that provides for bonding to the subsequently applied ceramic coating (36).

8. The process as recited in claim 6 or claim 7, including the step of applying a ceramic coating (36) to the surfaces of the turbine vane (10) coated with the metallic coating (15) and the slurry coating (24) on both the surfaces accessible from an exterior of the turbine vane (10) and the surfaces not accessible from the exterior of the turbine vane (10) after heat-treating.

9. The process as recited in any of claims 6 to 8, wherein the thermal spraying process (12) includes the step of propelling coating material (16) heated with a plasma torch (14) onto the surface of the turbine vane (10).

10. The process as recited in any of claims 6 to 9 , wherein the turbine vane (10) includes at least one airfoil and at least one surface (20) on which a coating cannot be applied using the thermal spraying process (12), and the at least one surface on which a coating (20) cannot be applied using the thermal spraying process (12) is coated with the slurry coating (24).

11. The process as recited in any of claims 6 to 10, wherein the slurry coating (24) comprises a suspension of nickel based alloy particles, preferably no larger than 25 microns, in an organic binder.

12. The process as recited in any of claims 6 to 11, wherein the heat-treating (26) of the turbine vane (10) comprises removing the organic binder from the turbine vane (10).

## Patentansprüche

1. Verfahren zum Beschichten einer Komponente, umfassend die folgenden Schritte:
Auftragen einer Sprühbeschichtung (15) auf wenigstens eine erste Oberfläche einer Komponente (10) durch ein Wärmesprühverfahren (12);
Auftragen (22) einer Schlammbeschichtung (24) auf wenigstens eine zweite Oberfläche der Komponente (10), wobei die zweite Oberfläche nicht von dem zum Beschichten der ersten Oberfläche verwendeten Sprühbeschichtungsverfahren (12) erreichbar ist; und
Wärmebehandeln (26) der Komponente;
wobei der Wärmebehandlungsschritt (26) dazu dient, die aufgetragene Sprühbeschichtung (15) und die Schlammbeschichtung (24) in die erste und zweite Oberfläche der Komponente (10) hinein zu verteilen;
wobei die Sprühbeschichtung (15) auf der wenigstens einen ersten Oberfläche und die Schlammbeschichtung (24) auf der wenigstens einen zweiten Oberfläche eine metallische Beschichtung umfassen, die oxidativen Widerstand bereitstellt und eine Bindungsschicht schafft, mit der sich eine nachträglich aufgetragene Keramikschicht (36) verbindet; und
wobei das Verfahren weiter den Schritt (34) des Auftragens einer Keramikschicht (36) auf die Komponente (10) nach der Verteilung der Sprühbeschichtung (15) und der Schlammbeschichtung (24) umfasst.

2. Verfahren nach Anspruch 1, wobei der Wärmebehandlungsschritt (26) dazu dient, unerwünschte Teile des Schlamms von der Komponente (10) zu lösen.

3. Verfahren nach einem der vorhergehenden Ansprüche, wobei die Schlammbeschichtung (24) eine Suspension von metallischen Partikeln umfasst, bevorzugt eines von Partikeln einer Nickel-basierten Legierung und Partikeln einer MCrAIY-basierten Legierung.

4. Verfahren nach Anspruch 3, wobei das eine von den Partikeln der Nickel-basierten Legierung und den Partikeln der MCrAIY-basierten Legierung kleiner sind 25 Mikrometer und in einem organischen Bindemittel suspendiert sind.

5. Verfahren nach einem der vorhergehenden Ansprüche, einschließlich dem Schritt (30) des mechanischen Behandelns wenigstens einer Oberfläche der Komponente (10).

6. Verfahren nach einem der vorhergehenden Ansprüche, wobei die Komponente (10) eine Turbinenschaufelanordnung (10) umfasst.

7. Verfahren nach Anspruch 6, wobei die Schlammbeschichtung (24) eine zum Verbinden mit einer nachträglich aufgetragenen Keramikbeschichtung (36) fähige oxidationsresistente Zusammensetzung umfasst und bevorzugt ein Material enthält, das ein thermisch gezüchtetes Oxid erzeugt, welches das Binden der nachträglich aufgetragenen Keramikschicht (36) bereitstellt.

8. Verfahren nach Anspruch 6 oder Anspruch 7, einschließlich dem Schritt des Auftragens einer Keramikbeschichtung (36) auf die mit der metallischen Beschichtung (15) und der Schlammbeschichtung (24) beschichteten Oberflächen der Turbinenschaufel (10) sowohl auf den von einer Außenseite der Turbinenschaufel (10) zugänglichen Oberflächen als auch den von der Außenseite der Turbinenschaufel (10) nicht zugänglichen Oberflächen nach der Wärmebehandlung.

9. Verfahren nach einem der Ansprüche 6 bis 8, wobei das Wärmesprühverfahren (12) den Schritt des Verbreitens von mit einem Plasmabrenner (14) erhitzten Beschichtungsmaterial (16) auf die Oberfläche der Turbinenschaufel (10) umfasst.

10. Verfahren nach einem der Ansprüche 6 bis 9, wobei die Turbinenschaufel (10) wenigstens einen Flügel und wenigstens eine Oberfläche (20) umfasst, auf der eine Beschichtung unter Verwendung des Wärmesprühverfahrens (12) nicht aufgetragen werden kann, und die wenigstens eine Oberfläche, auf der eine Beschichtung (20) unter Verwendung des Wärmesprühverfahrens (12) nicht aufgetragen werden kann, mit der Schlammbeschichtung (24) beschichtet wird.

11. Verfahren nach einem der Ansprüche 6 bis 10, wobei die Schlammbeschichtung (24) eine Suspension von Partikeln einer Nickel-basierten Legierung, bevorzugt nicht größer als 25 Mikrometer, in einem organischen Bindemittel umfasst.

12. Verfahren nach einem der Ansprüche 6 bis 11, wobei die Wärmebehandlung (26) der Turbinenschaufel (10) das Entfernen des organischen Bindemittels von der Turbinenschaufel (10) umfasst.

## Revendications

1. Procédé de revêtement d'un composant comprenant les étapes :
d'application d'un revêtement par pulvérisation (15) sur au moins une première surface d'un composant (10) par un procédé de pulvérisation thermique (12) ;
d'application (22) d'un revêtement de suspension (24) sur au moins une seconde surface du composant (10), dans lequel la seconde surface ne peut pas être atteinte par le procédé de revêtement par pulvérisation (12) utilisé pour revêtir la première surface ; et
de traitement thermique (26) du composant ;
dans lequel l'étape de traitement thermique (26) sert à diffuser le revêtement par pulvérisation appliqué (15) et le revêtement de suspension (24) dans les première et seconde surfaces du composant (10) ;
dans lequel le revêtement par pulvérisation (15) sur l'au moins une première surface et le revêtement de suspension (24) sur l'au moins une seconde surface comprennent un revêtement métallique qui fournit une résistance oxydative et crée une couche de liaison, sur laquelle un revêtement céramique (36) appliqué ultérieurement adhère ;
et
dans lequel le procédé comprend en outre l'étape (34) d'application d'un revêtement céramique (36) sur le composant (10) après la diffusion du revêtement par pulvérisation (15) et du revêtement de suspension (24).

2. Procédé selon la revendication 1, dans lequel l'étape
de traitement thermique (26) sert à libérer des parties non souhaitées de la suspension, du composant (10).

3. Procédé selon une quelconque revendication précédente,
dans lequel le revêtement de suspension (24) comporte une suspension de particules métalliques, de préférence une des particules d'alliage à base de nickel et particules d'alliage à base de MCrAIY.

4. Procédé selon la revendication 3, dans lequel l'une
des particules d'alliage à base de nickel et des particules d'alliage à base de MCrAIY sont plus petites que 25 microns et sont suspendues dans un liant organique.

5. Procédé selon une quelconque revendication précédente, incluant l'étape (30) de traitement mécanique d'au moins une surface du composant (10).

6. Procédé selon une quelconque revendication précédente,
dans lequel le composant (10) comprend un ensemble d'aubes de turbine (10).

7. Procédé selon la revendication 6, dans lequel le revêtement de suspension (24) comprend une composition résistante à l'oxydation capable de se lier avec un revêtement céramique (36) appliqué ultérieurement et comporte de préférence un matériau qui produit un oxyde à croissance thermique qui fournit la liaison avec le revêtement céramique (36) appliqué ultérieurement.

8. Procédé selon la revendication 6 ou 7, incluant l'étape d'application d'un revêtement céramique (36) sur les surfaces de l'aube de turbine (10) revêtue avec le revêtement métallique (15) et le revêtement de suspension (24) à la fois sur les surfaces accessibles depuis un extérieur de l'aube de turbine (10) et les surfaces non accessibles de l'extérieur de la pale de turbine (10) après le traitement thermique.

9. Procédé selon l'une quelconque des revendications 6 à
8, dans lequel le procédé de pulvérisation thermique (12) comporte l'étape de propulsion de matériau de revêtement (16) chauffé avec une torche plasma (14) sur la surface de l'aube de turbine (10).

10. Procédé selon l'une quelconque des revendications 6 à
9, dans lequel l'aube de turbine (10) comporte au moins une voilure et au moins une surface (20), sur laquelle un revêtement ne peut pas être appliqué en utilisant le procédé de pulvérisation thermique (12), et l'au moins une surface, sur laquelle un revêtement (20) ne peut pas être appliqué en utilisant le procédé de pulvérisation thermique (12), est revêtue avec le revêtement de suspension (24).

11. Procédé selon l'une quelconque des revendications 6 à
10, dans lequel le revêtement de suspension (24) comprend une suspension de particules d'alliage à base de nickel, de préférence pas plus grande que 25 microns dans un liant organique.

12. Procédé selon l'une quelconque des revendications 6 à
11, dans lequel le traitement thermique (26) de l'aube de turbine (10) comprend le retrait du liant organique, de l'aube de turbine (10).
